# EUROPEAN PATENT SPECIFICATION

(11) **EP 4 343 916 B1**
(45) Date of publication and mention of the grant of the patent: **16.09.2026**
(21) Application number: 23740391.0
(22) Date of filing: 05.01.2023
(51) Int. Cl.: H01M 50/463, H01M 10/0583, H01M 10/04, H01M 50/489, H01M 50/451, H01M 10/052, H01G 11/22

(54) **ELECTRODE ASSEMBLY AND ELECTROCHEMICAL ELEMENT COMPRISING SAME**
ELEKTRODENANORDNUNG UND ELEKTROCHEMISCHES ELEMENT DAMIT
ENSEMBLE ÉLECTRODE ET ÉLÉMENT ÉLECTROCHIMIQUE LE COMPORTANT

(30) Priority: 13.01.2022 KR 20220005262
(43) Date of publication of application: 27.03.2024
(73) Proprietor: LG Energy Solution, Ltd., Seoul 07335 (KR)
(72) Inventor: LEE, So-Yeong, Daejeon 34122 (KR); BAE, Kyeong-Hui, Daejeon 34122 (KR); JEONG, So-Mi, Daejeon 34122 (KR); BAE, Won-Sik, Daejeon 34122 (KR)
(74) Representative: Hoffmann Eitle
(86) International application number: PCT/KR2023/000229
(87) International publication number: WO 2023/136547

(56) References cited:
- WO-A1-2021/131879
- WO-A1-2021/131879
- KR-A- 20160 120 509
- KR-A- 20160 120 509
- KR-A- 20210 026 537
- KR-B1- 101 666 049
- KR-B1- 101 666 049
- US-A1- 2020 243 895
- US-A1- 2020 243 895
- US-B2- 10 833 349
- US-B2- 10 833 349

## Description

### Technical Field

The present disclosure relates to an electrode assembly and an electrochemical device including the same, and specifically to a zigzag-stacked type electrode assembly and a secondary battery including the same.

### Background Art

Recently, interest in energy storage technology has been increasing. Research and development efforts of batteries are becoming more and more specific as the fields of application are expanded to mobile phones, camcorders, notebook PCs, and even electric vehicles. Electrochemical devices are one of the most promising areas in this regard, and the development of secondary batteries as small, lightweight, and high-capacity rechargeable batteries has been a focus of interest, especially with the recent trend toward miniaturization and lightweight electronics.

Secondary batteries are also categorized according to the structure of the cathode/separator/anode electrode assembly. For example, there are jelly-roll (wound type) electrode assemblies, which are long sheets of cathodes and anodes wound together with a separator, and stacked (stacked type) electrode assemblies, which are multiple cathodes and anodes cut into small-sized units and stacked sequentially with a separator. However, these conventional electrode assemblies have several problems.

First, jelly-roll electrode assemblies are made by closely winding long cathode and anode sheets into a cylindrical or elliptical structure in cross-section so that the stresses caused by the expansion and contraction of the electrodes during charge and discharge accumulate inside the electrode assembly and when such stress accumulation exceeds a certain limit, deformation of the electrode assembly occurs. Due to the deformation of the electrode assembly, the spacing between the electrodes becomes nonuniform, resulting in a problem in that the performance of the battery rapidly deteriorates, and the safety of the battery is threatened due to an internal short circuit. In addition, since long sheet-shaped cathodes and anodes must be wound, it is difficult to quickly wind the cathode and anode while maintaining a constant distance, thereby reducing productivity.

Second, stacked electrode assemblies require sequential stacking of multiple cathode and anode units, so a separate electrode plate transfer process is required to manufacture the units, and the sequential stacking process requires a lot of time and effort, resulting in low productivity.

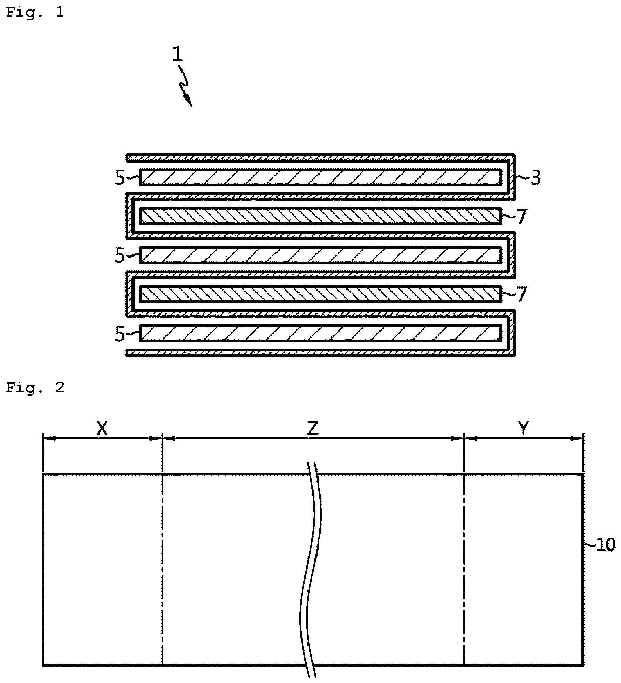

FIG. 1 is a cross-sectional view schematically showing the structure of a stacked electrode assembly.

Referring to FIG. 1, as a stacked electrode assembly, a zigzag-stacked (ZZS) type electrode assembly 1 has been developed in which the cathode 5 and the anode 7 are stacked in a zigzag manner with the separator 3 interposed.

A battery is manufactured by assembling the above zigzag-stacked electrode assembly and finally fixing assembled electrode assembly through a hot press process. At this time, the heat and pressure applied in the final hot-pressing process are applied to the entire stacked electrode assembly, so the amount of heat and pressure transferred to the top and bottom ends of the electrode assembly relative to the stacking direction becomes larger, and the thickness deformation of the top and bottom substrates becomes larger, which eventually leads to poor quality electrode assembly.

KR 2021-0026537 A discloses a zigzag-stacked electrode assembly.

### Disclosure

### Technical Problem

Accordingly, the problem that the present disclosure seeks to solve is to provide a separator that can minimize thickness deformation and damage to the pores of a porous structure when manufacturing an electrode assembly with a zigzag-stacked (ZZS) method and a novel structure for an electrode assembly including the separator.

Specifically, the present disclosure seeks to provide a novel structure of an electrode assembly in which thickness deformation and pore damage of the porous structure can be minimized despite the heat and pressure that are particularly strongly transferred to the separator region at the bottom end of the stacking direction of the electrode assembly where the hot press is applied, during the hot-pressing step for manufacturing the electrode assembly.

This is to maintain high dielectric breakdown voltages and to provide separators and electrode assemblies including those with improved insulating properties.

### Technical Solution

In order to solve the above problem, according to an aspect of the present disclosure, there is provided an electrode assembly as defined in claim 1.

The electrode assembly includes a unit electrode and a separator in the form of a strip, wherein the separator is folded in a zigzag manner, and the unit electrode is inserted into a part where the separator overlaps, and wherein the separator comprises a porous substrate of a polymeric material and a porous coating layer formed on each of the upper and lower surfaces of the porous substrate and including inorganic particles.

The porous substrate has a constant thickness (Ts) in a middle region AA' ranging from a first position (A) and a second position (A'), the first position (A) and the second position (A') being in opposite directions and being equidistant from the center of the porous substrate in the longitudinal direction, and all or at least parts of a region AE ranging from the first position (A) to one end (E) and a region A'E' ranging from the second position (A') to the other end (E') are disposed at the uppermost and lowermost relative to the stacking direction of the electrode assembly, respectively.

The porous substrate has a gradient thickness (Ts) in which the thickness gradually decreases towards either end from the middle region in a longitudinal direction of the separator, the porous coating layer has a gradient total thickness (Tc) in which the thickness gradually increases towards either end from the middle region in the longitudinal direction, and the total thickness (Ts + Tc) is constant across the plane of the separator.

According to an embodiment, the middle region AA' between the first position (A) and the second position (A') is disposed at neither an uppermost end portion or lowermost end portion of the electrode assembly in a stacking direction of the electrode assembly, and in separator regions positioned at the uppermost and lowermost end portions of the separator in the stacking direction, the thickness (Ts) of the porous substrate decreases towards an end of the separator.

According to an embodiment, the porous coating layers formed on each of the upper and lower surfaces of the porous substrate are formed symmetrically with respect to the centerline of the longitudinal direction of the separator so that at equidistant positions orthogonal to the longitudinal direction of the separator, the thickness of each of the porous coating layers is the same as each other or the thickness difference is within 10%.

According to an embodiment, the porous coating layers respectively formed on the upper and lower surfaces of the porous substrate are symmetric with respect to a center line of the longitudinal direction of the separator, so that the thickness of the porous coating layer on the upper surface is equal to or within 10% of the thickness of the porous coating layer on the lower surface, at equidistant positions in a direction orthogonal to the longitudinal direction.

According to an embodiment, the ratio (Ts/Tc) of the thickness (Ts) of the porous substrate to the total thickness (Tc) of the porous coating layer across the entire area of the separator may be from 0.5 to 5.

According to an embodiment, the ratio (Ts/Tc) of the thickness (Ts) of the porous substrate to the total thickness (Tc) of the porous coating layer at the above position (A) may be from 1 to 5.

According to an embodiment, the thickness strain rate of the outermost portion of the electrode assembly may be 30% or less after being fixed by a hot press process at a pressure of 3 MPa to 10 MPa under a temperature of 50°C to 110°C.

According to another aspect of the present disclosure, an electrochemical device is provided which comprises the electrode assembly according to the aspect or any embodiment described above accommodated in a case.

According to an embodiment, the electrochemical device may be a lithium secondary battery.

### Advantageous Effects

An electrode assembly according to the present disclosure may exhibit characteristics such that thickness deformation of the separator and pore damage to the porous structure within the separator is minimized despite the heat and pressure applied to the top and bottom ends of the stacking direction when secured via a hot-pressing process.

Accordingly, the advantage of providing an electrode assembly having excellent insulating properties can be exhibited.

### Description of Drawings

FIG. 1 is a schematic cross-sectional view of one embodiment of a ZZS-type electrode assembly;
FIG. 2 is a schematic illustration of the top surface of a strip-shaped separator according to one embodiment of the present disclosure;
FIG. 3 is a schematic illustration of a side view of a strip-shaped separator according to one embodiment of the present disclosure;
FIG. 4 is a schematic illustration of a side view of a strip-shaped separator according to one embodiment of the present disclosure;
FIG. 5 is a schematic illustration of the structure of an electrode assembly prior to assembly according to one embodiment of the present disclosure;
FIG. 6 is a schematic illustration of a method of manufacturing an electrode assembly according to one embodiment of the present disclosure;
FIG. 7 is a schematic illustration of a lateral structure when folding a separator in a zigzag manner according to one embodiment of the present disclosure;
FIG. 8 is a schematic illustration of a lateral structure when folding a separator in a zigzag manner according to one embodiment of the present disclosure; and
FIG. 9 is a schematic illustration of a lateral structure when folding a separator in a zigzag manner according to one embodiment of the present disclosure.

### Mode for Invention

Hereinafter, embodiments of the present disclosure will be described in detail.

Throughout this specification, when a part "includes" a certain component, it means that other components may be further included rather than excluding other components, unless otherwise stated.

In this specification, the terms "about", "substantially", etc., used throughout this specification are used as meaning at or close to the numerical values when manufacturing and material tolerances inherent in the stated meanings are presented to aid the understanding of the present application. It is used to prevent an unconscionable infringer from using the mentioned disclosure in an unreasonable way.

In this specification, the description of the term "A and/or B" means "A or B, or both".

Certain terms used in the following detailed description of the disclosure are for convenience only and are not intended to limit the disclosure. In addition, words denoting direction, such as up, down, left, right, before, after, inside, and outside, are intended to indicate the direction in the referenced drawings or direction toward or away from the geometric center of the designated apparatus, system, and members thereof, respectively.

The present disclosure relates to an electrode assembly and an electrochemical device including the same. Examples of the electrochemical device include a primary battery, a secondary battery, a supercapacitor, and an electric double-layer capacitor. The secondary battery may be, more specifically, a lithium-ion secondary battery.

The electrode assembly includes a unit electrode and a strip-shaped separator, wherein the separator has a ZZS-type structure by folding in a zigzag manner, and the unit electrode is inserted in the part where the folded separator is overlapped.

Referring to the following drawings, a separator, an electrode assembly including the separator, and each component included in the electrode assembly will be described in more detail.

The separator includes a porous substrate made of a polymer material and a porous coating layer formed on each of the upper and lower surfaces of the porous substrate and including inorganic particles. The thickness of the porous substrate (Ts) from the middle region of the separator towards both end portions in the longitudinal direction of the separator is gradually decreased, and the total thickness (Tc) of the porous coating layer gradually increases towards both end portions, resulting in the total thickness (Ts + Tc) being maintained constant over the entire surface of the separator.

In the present specification, the "longitudinal direction" of the separator refers to the direction in which two or more unit electrodes are disposed on the strip-shaped separator.

In the present specification, the "stacking direction" of the electrode assembly refers to a height direction in which the unit electrodes are stacked when the electrode assembly is folded in a zigzag manner, and the unit electrode is inserted into a part where the separator overlaps.

In the present specification, the term "thickness is kept constant within a specific area" indicates that when measuring the thickness of any position within a specific area in the same method, the measured thickness value is within an error range of 5% or less. Specifically, it can be expressed that the thickness remains constant if the deviation of the thickness values at any two locations within a specific area is within 5%, 4%, 3%, 2%, 1%, or 0% (i.e., no difference).

In the present specification, the term "thickness gradually increases within a specific area" refers to a continuous or discontinuous increase in thickness values when measured in the same manner according to a certain direction within a specific area. The ratio in which the thickness value is increased may be maintained constant within an error range of 5% or may be changed discontinuously, but the gradual increase in the thickness within the specific region may preferably indicate a constant ratio and continuous increase in the thickness value.

In the present specification, the term "thickness gradually decreases within a specific area" refers to a continuous or discontinuous decrease in thickness values when measured in the same manner according to a certain direction within a specific area. The ratio in which the thickness value decreases may be maintained constant within an error range of 5% or may be discontinuously changed, but the thickness gradually decreases within the specific area. It is preferable to show that the thickness value continuously decreases with a constant ratio.

In the present specification, each configuration "thickness" may represent a value measured in accordance with a known method for measuring the thickness of a separator of a battery unless otherwise defined.

According to an embodiment, the thickness of the separator and/or the porous substrate may represent values measured using a known thickness measuring device. For example, the above thickness meter may use Mitutoyo's VL-50S product but is not limited thereto.

According to another embodiment, the thickness of the separator and/or the porous substrate may be measured through an SEM image of the cross-section of the separator and/or the porous substrate.

In one embodiment of the present disclosure, the thickness of the porous substrate may be measured by measuring the porous coating layer after removing the porous coating layer from the separator. For example, the thickness of the porous substrate may be measured after removing the porous coating layer using a solvent capable of dissolving the porous coating layer included in the separator, or the porous coating layer can be peeled off using tape, and the thickness of the remaining porous substrate can be measured.

In one embodiment of the present disclosure, the thickness of the porous coating layer may be measured by a difference value between the thickness of the porous substrate measured after measuring the thickness of the separator, but the measurement method is not limited thereto.

In one embodiment of the present disclosure, the strip-shaped separator is a long strip-shaped separator having a predetermined width, and specifically, may represent a rectangular separator having an aspect ratio of one or more. More specifically, the separator may have a length of about 1,000 mm or more.

FIG. 2 is a schematic illustration of the top surface of a strip-shaped separator according to one embodiment of the present disclosure. Referring to FIG. 2, the separator 10 may be partitioned into an uppermost region X, a lowermost region Y, and an inner region Z located between the uppermost region and the lowermost region relative to the stacking direction when the electrode assembly is folded in a ZZS method.

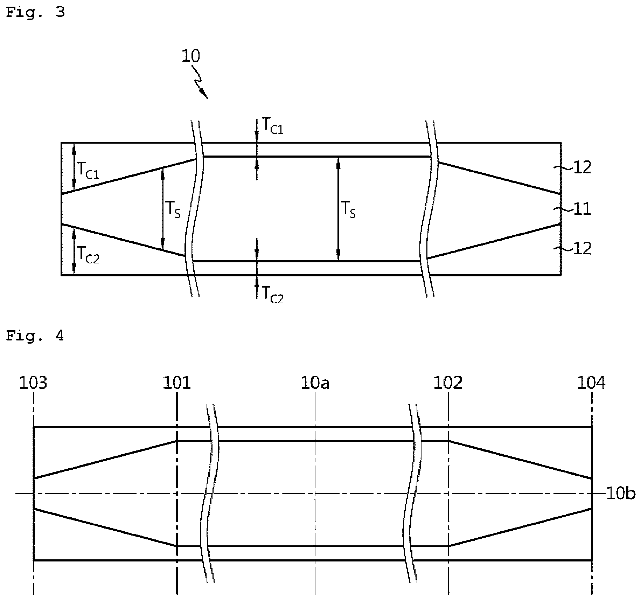

FIG. 3 is a schematic illustration of a side view of a strip-shaped separator according to one embodiment of the present disclosure. Referring to FIG. 3, the separator 10 includes a porous substrate 11 and includes porous coating layers 12 formed on the upper and lower surfaces of the porous substrate, respectively. In this specification, for convenience of description, the thickness of the porous substrate is denoted by Ts, and the total thickness of the porous coating layer is denoted by Tc. At this time, the total thickness (Tc) of the porous coating layer represents the sum of the thickness (Tc₁) of the porous coating layer formed on one surface of the porous substrate and the thickness (Tc₂) of the porous coating layer formed on the other surface.

Referring to FIG. 3, in the separator 10, the thickness (Ts) of the porous substrate gradually decreases from the longitudinal center portion 10a to both end portions, the total thickness (Tc) of the porous coating layer gradually increases toward both end portions, and the total thickness (Ts + Tc) is maintained constant over the entire surface of the separator.

FIG. 4 is a schematic illustration of a side view of a strip-shaped separator according to one embodiment of the present disclosure. Referring to FIG. 4, the separator includes a region (AA') in which the thickness (Ts) of the porous substrate is constant from the longitudinal center portion 10a to a predetermined position 101 in the direction of one end 103 and a predetermined position 102 in the direction of the opposite end 104. In addition, the separator includes an region AE where the thickness (Ts) of the porous substrate gradually decreases from the position 101 to one end 103 and an region **A'E'** where the thickness (Ts) of the porous substrate gradually decreases from the position 102 to the opposite end 104.

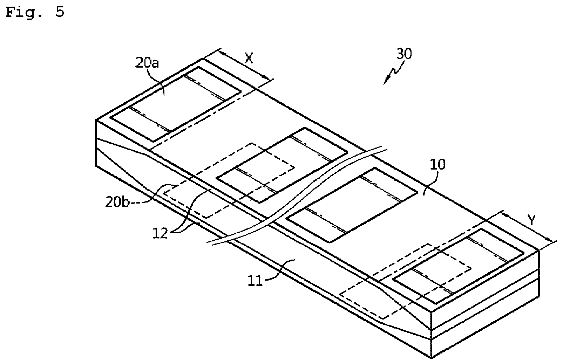

FIG. 5 schematically shows the structure of a pre-assembled electrode assembly 30 with unit electrodes 20a and 20b disposed on a strip-shaped separator 10 according to one embodiment of the present disclosure. Referring to this, a plurality of first unit electrodes is disposed side by side on the first side of the separator, spaced apart by a predetermined distance. The separation distance between each unit electrode is preferably wider than the width of the first unit electrode, considering that the folded surface of the separator should cover the entire surface of the unit electrode. Meanwhile, a plurality of second unit electrodes may be disposed in the same shape on the other side of the separator. In this case, the first unit electrode and the second unit electrode may be staggered such that they do not overlap at all when viewed from the side. In the case of staggered arrangement as described above, the adjacent first and second unit electrodes are preferably spaced apart by a certain distance so that the separator can be folded. When arranged as described above, an electrode assembly may be obtained having a structure in which the first unit electrode and the second unit electrode are stacked with the separator when the separator is folded. The first unit electrode and the second unit electrode may be opposite in polarity to each other, for example, the first unit electrode may be a cathode, and the second unit electrode may be an anode, or vice versa.

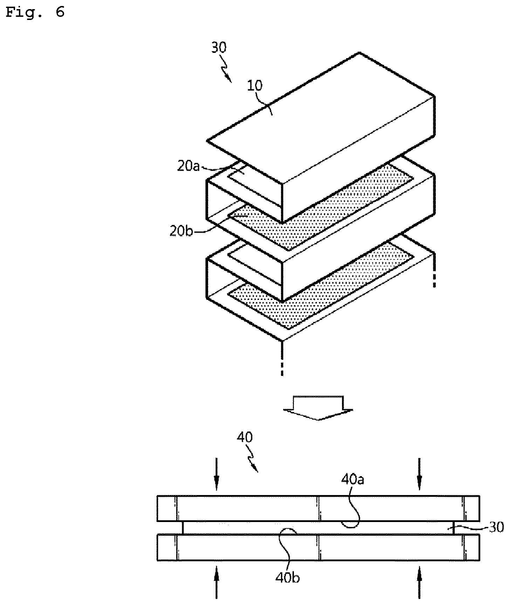

FIG. 6 is a schematic illustration of a method of manufacturing an electrode assembly according to one embodiment of the present disclosure. Referring to FIG. 6, the separator 10 is folded in a zigzag manner, unit electrodes 20a and 20b are inserted in the portion where the separator overlaps, the separator and the unit electrodes are stacked, and the stacked structure is pressed after the unit electrodes are inserted to produce a ZZS type electrode assembly. Since the pressure applied to the uppermost region 40a and the lowermost region 40b is relatively large compared to the inner region when pressure is applied to the electrode assembly 30, which may cause shape deformation of the separator in the uppermost region 40a and/or the lowermost region 40b, the present disclosure may introduce a new structure into the porous substrate and the porous coating layer present in the uppermost region X and/or the lowermost region Y. Therefore, the present disclosure may introduce a new structure into the porous substrate and the porous coating layer.

The overall thickness is maintained constant over the entire surface of the separator so that the interval at which unit electrodes are disposed across the entire surface of the electrode assembly and the folding interval during assembly of the electrode assembly can be maintained. At the same time, since the thickness of the porous substrate is gradually decreased towards both end portions of the separator, and the thickness of the porous coating layer formed on each of the upper and lower surfaces of the porous substrate is gradually increased, the heat resistance and impact resistance of the uppermost and lowermost portions relative to the stacking direction of the electrode assembly can be improved when heat and/or pressure is applied through the end portions in manufacturing the electrode assembly, thereby minimizing the deformation of the thickness and porosity of the central portion and the end portions relative to the stacking direction of the electrode assembly.

In one embodiment of the present disclosure, at least a part of the region AA' may be disposed in the region X and/or the region Y.

In another embodiment of the present disclosure, the separator may be folded in the region AA' between the position A and the position A'.

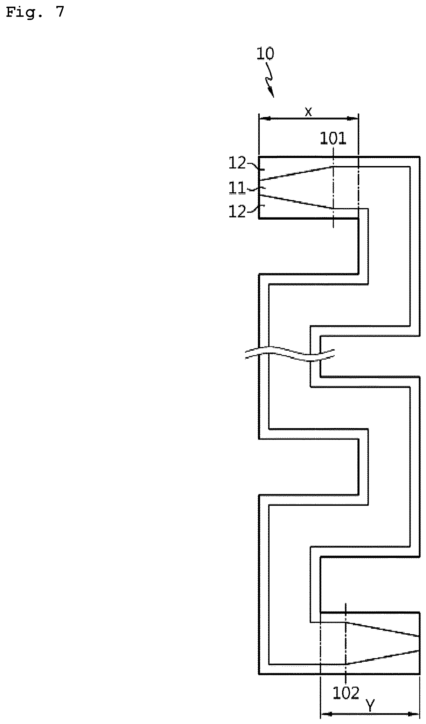

FIG. 7 is a schematic illustration of a lateral structure when folding a separator in a zigzag manner according to one embodiment of the present disclosure. Referring to FIG. 7, a predetermined position 101 that is spaced apart from the longitudinal center of the separator 10 by a predetermined distance and starts to decrease in thickness of the porous substrate toward the end portion is disposed in the uppermost region X, when a predetermined position 102 at which the thickness of the porous substrate begins to decrease toward the opposite end portion is disposed in the lowermost region Y, a part of the region AA' may be disposed in the uppermost region X and the lowermost region Y.

In another embodiment of the present disclosure, the region AA' may not be disposed in the uppermost region X and the lowermost region Y based on the stacking direction of the electrode assembly, but all or at least a part of the region AE and the region A'E' may be preferably disposed in the region X and the region Y.

Specifically, since the region Z is a region that is relatively less affected by heat and/or pressure than the region X and the region Y when heat and/or pressure is applied in the manufacture of the electrode assembly, the region AA' is preferably disposed of the same as the region Z and/or within the region Z. That is, the region X may be included within the region AE, and the region Y may be included in the A'E' region.

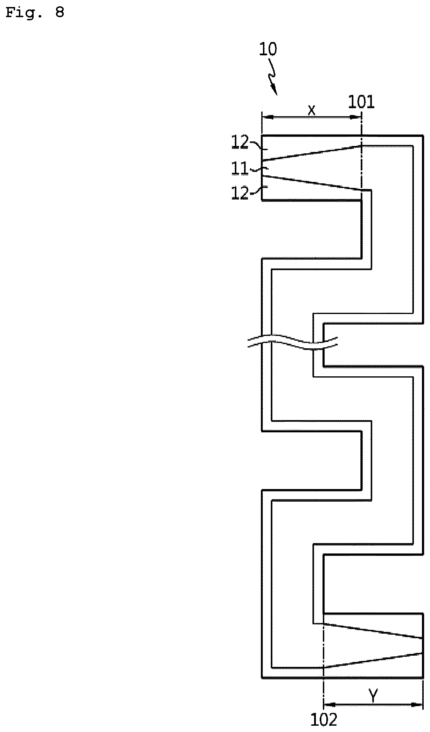

FIG. 8 is a schematic illustration of a lateral structure when folding a separator in a zigzag manner, according to another embodiment of the present disclosure. Referring to FIG. 8, the position A is a predetermined position 101 at which the thickness of the porous substrate starts to decrease toward the end portion of the separator and is positioned at the inner end portion of the uppermost region X relative to the stacking direction of the electrode assembly, and the position A' is a predetermined position 102 at which the thickness of the porous substrate starts to decrease toward the opposite end portion, and is positioned at the inner end portion of the lowermost region Y relative to the stacking direction of the electrode assembly, so that all of the region AE may coincide with the region X, and all of the regions A'E' may coincide with the region Y. The separator may be folded one or more times in the region AA'.

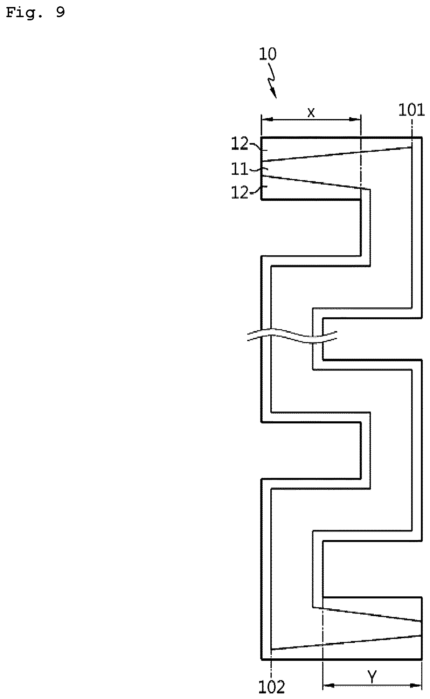

FIG. 9 is a schematic illustration of a lateral structure when folding a separator in a zigzag manner, according to another embodiment of the present disclosure. Referring to FIG. 9, the position A is a predetermined position 101 at which the thickness of the porous substrate starts to decrease toward the end portion of the separator and is disposed of inside by a predetermined distance from the uppermost region X relative to the stacking direction of the electrode assembly. The position A' is a predetermined position 102 at which the thickness of the porous substrate starts to decrease toward the opposite end portion, and is disposed on the inside at a predetermined distance from the lowermost region Y relative to the stacking direction of the electrode assembly, a part of each of the region AE and region A'E' may include the region X and the region Y, respectively.

In one embodiment of the present disclosure, the region AA' may include, for example, a length of 10% to 90%, 15% to 80%, 20% to 60%, or 20% to 50% of the total length of the separator. Accordingly, the region AE and the region A'E' may be included at an end portion of the separator such that a length excluding the region AA' is the entire length of the region AE and the region A'E', respectively.

In one embodiment of the present disclosure, the lengths of the region AE and the region A'E' may be the same. That is, the lengths of the region AE and the region A'E' may be equal to the length obtained by dividing equally the entire length of the separator except for the region AA'.

In one embodiment of the present disclosure, the lengths of the regions AE and the regions A'E' may be different, and in this case, a region having a longer length is assembled to be positioned at the lowermost end portion of the electrode assembly relative to the stacking direction and may be preferable in terms of minimizing shape deformation during the hot-pressing process.

The region AE and the region A'E' are formed by decreasing the thickness (Ts) of the porous substrate and increasing the total thickness (Tc) of the porous coating layer toward the end portion of the separator, thereby preventing or reducing the shape deformation caused by high temperature and high pressure during the hot-pressing process during electrode assembly, but the effect of the present disclosure is not limited thereto.

In one embodiment of the disclosure, the air permeability of the separator measured in the region AE, or the air permeability of the separator measured in the region A'E', may be 1 to 15 times the air permeability of the separator measured in the region AA'. A separator that satisfies any one embodiment of the present disclosure may exhibit an air permeability ratio that satisfies the above range. Specifically, the air permeability measured in the region AE or the region A'E' may be 2 to 14 times, 3 to 13 times, 4 to 12 times, 5 to 11 times, 6 to 10 times, or 7 to 9 times the air permeability measured in the region AA'. Preferably, it may be 1 to 5 times.

In one embodiment of the present disclosure, the porous coating layer formed on each of the upper and lower surfaces of the porous substrate may be formed symmetrically with respect to the central portion of the longitudinal direction of the separator.

Referring to FIGS. 3 and 4, when a porous coating layer formed on an upper surface of the porous substrate is named the first porous coating layer, and a porous coating layer formed on a lower surface of the porous substrate is named the second porous coating, the first porous coating layer and the second porous coating layer may be formed in a shape that is line-symmetrical with respect to a thickness-directional center line 10b of the porous substrate.

Specifically, the porous coating layers formed on each of the upper surface and lower surface of the porous substrate may be formed symmetrically with respect to a centerline in the thickness direction of the separator so that at the same random position orthogonal to the longitudinal direction of the separator, the thickness of each of the porous coating layers is the same as each other or the thickness difference is within 10%.

For example, the thickness (Tc₁) of the first porous coating layer and the thickness (Tc₂) of the second porous coating layer positioned on an imaginary line orthogonal to the longitudinal direction of the separator at any position of the porous substrate are the same, if different, the thickness difference may be within 10%.

More specifically, the difference between the thickness of the first porous coating layer and the second porous coating layer is within 10%, within 8%, within 5%, within 4%, within 3%, within 2%, within 1%, or 0% (i.e., the same).

In one embodiment of the present disclosure, the separator may be formed to have a symmetrical structure with respect to the longitudinal center 10a.

In one embodiment of the present disclosure, the separator may be formed to have a symmetrical structure with respect to the center line 10a in the longitudinal direction and the center line 10b in the thickness direction. Referring to FIG. 4, the region AE from the predetermined position 101 to the end 103 and the region **A'E'** from the predetermined position 102 to the opposite end 104 may be formed in a symmetrical structure with respect to the center line 10a in the longitudinal direction and the center line 10b in the thickness direction.

Specifically, in the region AE and the region A'E', the thickness (Ts) of the porous substrate at any positions spaced apart by the same distance from the center line of the longitudinal direction 10a of the separator may be the same or within 10%.

More specifically, in the region AE and the region A'E', the thickness (Ts) of the porous substrate at any positions spaced apart from the center line of the longitudinal direction 10a of the separator by the same distance may be within 10%, within 8%, within 5%, within 4%, within 3%, within 2%, or within 1% (i.e., the same).

In one embodiment of the present disclosure, the ratio (Ts/Tc) of the thickness (Ts) of the porous substrate to the total thickness (Tc) of the porous coating layer over the entire surface of the electrode assembly separator may be 0.5 to 5. Specifically, the ratio (Ts/Tc) may be 0.8 to 3, 1 to 2, or 1 to 1.8. In the electrode assembly, the thickness (Ts) of the porous substrate gradually decreases towards the end portion of the separator in the longitudinal direction, and the total thickness (Tc) of the porous coating layer gradually increases, and thus the ratio (Ts/Tc) decreases towards the end portion of the separator in the longitudinal direction.

In another embodiment of the disclosure, the ratio (Ts/Tc) of the thickness (Ts) of the porous substrate to the total thickness (Tc) of the porous coating layer at the position A may be from 1 to 5. Specifically, the ratio (Ts/Tc) at the position A may be 1 to 3, 1 to 2, or 1.5 to 1.8. In the electrode assembly, as described above, in the region AA' from the position A to the position A', the thickness (Ts) of the porous substrate is maintained constant, and the ratio (Ts/Tc) at the position A may represent the maximum value of the ratio (Ts/Tc) over the entire surface of the separator.

In one embodiment of the present disclosure, the porous substrate means a substrate having a plurality of pores formed therein as a porous ion-conducting barrier that allows ions to pass through while blocking electrical contact between the cathode and anode. The pores are mutually connected to each other so that gas or liquid can pass from one side of the substrate to the other side. As such a porous substrate, a porous polymer film, including a thermoplastic resin, may be used from the viewpoint of imparting a shutdown function. Here, the shutdown function refers to a function of preventing the thermal runaway of the battery by blocking the movement of ions by dissolving the thermoplastic resin and closing pores of the porous substrate when the battery temperature is high. As the thermoplastic resin, a thermoplastic resin having a melting point of less than 200°C is suitable, and polyolefin is particularly preferred.

In one embodiment of the present disclosure, the porosity of the porous substrate may be, for example, 30% to 90%, 35% to 80%, 40% to 70%, 40% to 60%, or 40% to 50%. The porosity of the porous substrate may represent, for example, a value measured by the formula [true density-density of the porous substrate/true density of the porous substrate * 100 (%)] of the material contained in the porous substrate.

In one embodiment of the present disclosure, the thickness of the porous substrate is not particularly limited as long as it satisfies the range of the ratio (Ts/Tc) described above but may be, for example, in a range of 5 to 300 µm.

The porous coating layer is formed on the upper and lower surfaces of the porous substrate, respectively, and includes inorganic particles. In the porous coating layer, inorganic particles may be densely packed to have a plurality of micropores resulting from interstitial volumes formed between inorganic particles.

In one embodiment of the present disclosure, the porous coating layer may further include a binder resin so that all or at least a portion of the surface of the inorganic particles is coated with the binder resin. At this time, the inorganic particles are surface-bonded and/or point-bonded through the binder resin. For example, the inorganic particles and the binder resin in the porous coating layer may be included in a weight ratio of 95:5 to 50:50.

In one embodiment of the present disclosure, the inorganic particles may be used without particular limitation as long as they are electrochemically stable. That is, the inorganic particles that can be used in the present disclosure are not particularly limited as long as oxidation and/or reduction reactions do not occur in the operating voltage range of the applied electrochemical device (e.g., 0 to 5 V based on Li/Li⁺). Non-limiting examples of these mineral particles include BaTiO₃, Pb(Zr,Ti)O₃ (PZT), Pb₁₋ₓLaₓZr_{1-y}Ti_{y}O₃ (PLZT, 0<x<1, 0<y<1), Pb(Mg_{1/3}Nb_{2/3})O₃-PbTiO₃ (PMN-PT), hafnia (HfO₂), SrTiO₃, SnO₂, CeO₂, MgO, NiO, CaO, ZnO, ZrO₂, SiO₂, Y₂O₃, Al₂O₃, SiC, and TiO₂, and one or more thereof may be included.

In one embodiment of the present disclosure, when a binder resin is included in the porous coating layer, the binder resin may include, for example, a polyvinylidene fluoride-based resin (PVDF-based resin). In one embodiment of the present disclosure, the PVDF-based resin may include at least one of a homopolymer of vinylidene fluoride (i.e., polyvinylidene fluoride), a copolymer with a monomer copolymerizable with vinylidene fluoride, and one or more of the mixtures thereof. In one embodiment of the present disclosure, as the monomer, for example, a fluorinated monomer and/or a chlorine-based monomer can be used. Non-limiting examples of the fluorinated monomers include vinyl fluoride; trifluoroethylene (TrFE); chlorofluoroethylene (CTFE); 1,2-difluoroethylene; tetrafluoroethylene (TFE); hexafluoropropylene (HFP); perfluoro(alkylvinyl) ethers, such as perfluoro (methylvinyl) ether (PMVE), perfluoro(ethylvinyl) ether (PEVE), and perfluoro(propylvinyl) ether (PPVE); perfluoro(1,3-dioxol); and perfluoro(2,2-dimethyl-1,3-dioxol) (PDD), and one or more of the mixture thereof.

In one embodiment of the present disclosure, a PVDF-based resin having a Tm of 140°C or less may be used in terms of adhesion to a polymeric assembly. To this end, the PVDF-based resin may include a copolymer of a vinylidene fluoride unit and another monomer copolymerizable with the vinylidene fluoride unit. Examples of such copolymers may include PVDF-TrFE, PVDF-TFE, PVDF-CTFE, and PVDF-HFP, and one or two or more thereof.

Meanwhile, the binder resin may further include a (meth)acrylic polymer resin, and if necessary, in addition to the PVDF-based resin, the (meth)acrylic-based polymer contains (meth)acrylic acid ester as a monomer, and non-limiting examples of (meth)acrylic-based polymer may include butyl (meth)acrylate, 2-ethylhexyl (meth)acrylate, ethyl (meth)acrylate, methyl (meth)acrylate, n-propyl (meth)acrylate, isopropyl (meth)acrylate, t-butyl (meth)acrylate, pentyl (meth)acrylate, n-oxyl (meth)acrylate, isooctyl (meth)acrylate, isononyl (meth)acrylate, lauryl (meth)acrylate, and tetradecyl (meth)acrylate as monomers.

The separator may be manufactured by applying the inorganic particles or slurry for forming an inorganic coating layer containing the binder resin and the inorganic particles on a porous substrate and drying the solvent and/or the binder resin to form the porous coating layer integrally on the porous substrate. A method of manufacturing a separator may be applied without limitation as long as the porous coating layer is formed on each of the upper and lower surfaces of the porous substrate and the separator having the above-described shape may be obtained and is not limited to a specific manufacturing method.

In one embodiment of the present disclosure, the thickness of the porous coating layer is not particularly limited as long as it satisfies the range of the ratio (Ts/Tc) described above, but may be, for example, in a range of 3 to 50 µm.

The electrode assembly, according to the present disclosure, includes a separator having the above-described shape and includes at least one pair of unit electrodes spaced at predetermined intervals on the separator.

In one embodiment of the present disclosure, the unit electrode may be a conventional cathode and/or anode used in an electrochemical device, and the cathode and anode may each be coated with an electrode active material on a current collector, but the size or shape is not particularly limited thereto.

When the electrode is a cathode, the cathode active material may be, for example, lithium manganese oxide, lithium cobalt oxide, lithium nickel oxide, lithium iron oxide, or a lithium composite oxide combining them, or a mixture of two or more thereof, but is not limited thereto.

When the electrode is an anode, the anode active material is, for example, lithium metal or lithium alloy, soft carbon, hard carbon, natural graphite, kish graphite, pyrolytic carbon, mesophase pitch-based carbon fiber, meso-carbon microbeads, mesophase pitches, petroleum or coal tar pitch derived cokes, or a mixture of two or more thereof, but is not limited thereto.

The electrode assembly according to the present disclosure having the above structure may improve heat resistance and impact resistance of the electrode assembly even when pressure is applied in the stacking direction of the electrode assembly through a hot press process, thereby exhibiting an excellent shape retention rate.

In one embodiment of the present disclosure, the outermost thickness deformation rate of the electrode assembly may be 30% or less after being fixed by a hot press process at a pressure of 3 to 10 MPa under a temperature of 50°C to 110°C.

In another embodiment of the present disclosure, the hot press process may be specifically performed at a pressure of 3 to 10 MPa at a temperature of 50°C to 110°C, and in this case, the outermost thickness deformation rate of the electrode assembly may be 30% or less after being fixed through the hot press process.

In the present specification, after being fixed through a conventional method for fixing an electrode assembly, such as the hot press process, the outermost thickness deformation rate of the electrode assembly may represent a value derived by measuring the thickness of the electrode assembly before and after being fixed, and according to the formula [(thickness before pressing - thickness after pressing)/thickness before pressing * 100 (%)].

In another embodiment of the present disclosure, after fixing through a conventional method for fixing an electrode assembly such as the hot-press process, the outermost thickness deformation rate of the electrode assembly may be specifically 30% or less, 25% or less, 20% or less, 15% or less. More specifically, after being fixed through the hot press process, the outermost thickness deformation rate of the electrode assembly may be 0% or more, 5% or more, or 10% or more to 15% or less, such as 11% to 12%.

In one embodiment of the present disclosure, in terms of thickness deformation rate before and after fixing, the outermost portion of the electrode assembly may be a region in which the thickness (Ts) of the porous substrate gradually decreases, and the total thickness (Tc) of the porous coating layer gradually increases.

In another embodiment of the present disclosure, in terms of thickness deformation rate before and after fixing, the outermost portion of the electrode assembly may represent all or at least a part of the above-described region AE and region A'E'.

In another embodiment of the present disclosure, after fixing through a conventional method for fixing an electrode assembly, such as the hot press process, the innermost thickness deformation rate of the electrode assembly may be specifically 15% or less.

In one embodiment of the present disclosure, in terms of thickness deformation rate before and after fixing, the innermost portion of the electrode assembly may be a region in which the thickness (Ts) of the porous substrate is maintained constant in the separator.

In another embodiment of the present disclosure, in terms of thickness deformation rate before and after fixing, the innermost portion of the electrode assembly may represent all or at least a part of the above-described region AA'.

In the present disclosure, the electrode assembly includes the separator having the above shape, thereby improving the dielectric voltage characteristics of the battery to increase the dielectric breakdown voltage and reduce the short-circuit occurrence rate (Hi-pot defect rate) even under high voltage conditions.

The dielectric breakdown voltage refers to the maximum voltage that the insulator may endure, and dielectric breakdown means that when a voltage is applied to an insulator, and when the voltage exceeds a certain value, the insulation is destroyed and loses its insulation performance.

The breakdown voltage may be measured by, for example, an AC/DC/IR Hi-Pot tester. For example, a stainless-steel mesh and a porous substrate are hot-press-bonded at 90°C, 4 MPa, and 1 sec conditions, and then the DC current is set to 0.5 mA, voltage boosts 100 V/s (voltage 3kV, ramp-up time 3s). When the experiment starts, the measurement is completed when a short circuit occurs as the voltage rises, and the voltage at that time is defined as the dielectric breakdown voltage.

In addition, the evaluation of the Hi-pot defect rate can be measured by determining the voltage represented by the lower 1% of samples exhibiting a low dielectric breakdown voltage through Weibull analysis among the total number of specimens tested.

In one embodiment of the present disclosure, after fixing through a conventional method for fixing an electrode assembly such as the hot press process, the dielectric breakdown voltage of the porous substrate present on the outermost portion of the electrode assembly may indicate a value of 800 kV/ mm or more.

In another embodiment of the present disclosure, after fixing through a conventional method for fixing an electrode assembly, such as the hot press process, the dielectric breakdown voltage of the porous substrate present on the outermost portion of the electrode assembly may specifically indicate a value of 1,000 kV/mm or more or 1,500 kV/mm or more.

The electrochemical device has the above-described electrode assembly accommodated in a case.

In one embodiment of the present disclosure, the case may be adopted to be commonly used as a battery case and is not particularly limited to the appearance in accordance with the use of the battery. For example, the case may be a cylindrical shape using a can, a prismatic shape, a pouch shape, or a coin shape.

When the electrode assembly described above is completed, an electrochemical device may be manufactured by placing and sealing a case by a conventional method, and the electrochemical device may be, for example, a lithium secondary battery.

Hereinafter, the present disclosure will be further described through examples, but the following examples are to illustrate the present disclosure, and the scope of the present disclosure is not limited only to these examples.

### Example 1

### [Preparation of separator]

A separator was prepared according to the following method.

The porosity in each configuration was measured according to the formula [(true density of the applied material-density of the configuration)/ density of the electrode assembly * 100 (%)].

The thickness of the separator was measured using a thickness meter (Mitutoyo, VL-50S).

### Preparation of porous substrates

Three types of polyethylene polymers having different molecular weights, polypropylene polymers, and an antioxidant were mixed in an appropriate ratio to prepare a porous substrate for use in a separator according to a known method. The three types of polyethylene polymers used were PE 40 (Mw 400,000 g/mol), PE 90 (Mw 900,000 g/mol), and PE 150 (Mw 1,500,000 g/mol), and the polypropylene polymer was PP 35 (Mw 350,000 g/mol). The porosity of the prepared porous substrate was 45%.

The porous substrate was prepared to have an overall width of 350 mm and a length of 1 m, a thickness measured at both ends of 12 µm each, and to gradually increase the thickness from both end portions to a point 0.3 m in the longitudinal direction and then maintain the thickness of 15 µm from the point 0.3 m in the longitudinal direction.

### Preparation of porous coating layer

A slurry for inorganic coating was prepared by mixing a PVDF-HFP binder (Mw 500,000 g/mol, HFP 15 wt%) and inorganic particles in a weight ratio of 80:20 in an appropriate solvent.

The slurry for the inorganic coating prepared above was applied to the entire surface of the porous substrate by a dip coating method and dried according to a humid phase separation method to form a porous coating layer on each of the upper and lower surfaces of the prepared porous substrate.

The porous coating layer formed on each of the upper and lower surfaces was prepared so that the thickness measured at both ends was 6 µm each, and the thickness gradually decreased to a point 0.3 m from both ends in the longitudinal direction, and a thickness of 4.5 µm was maintained from the point 0.3 m.

As a result, a separator having a constant overall thickness of 24 µm was prepared over the entire surface.

### [Manufacturation of electrode assembly]

An electrode assembly was manufactured using the separator prepared above. Specifically, 17 ea of cathodes and 16 ea of anodes were placed across the upper and lower surfaces of the separator. At this time, the point where the end of the cathode is positioned on one side and the point where the end of the anode is positioned on the other side are spaced apart from each other so that a horizontal distance on the plane is 3 mm. Lithium cobalt oxide LCO was used as the cathode active material, and graphite was used as the anode active material (N/P ratio > 100).

### Comparative Example 1

### [Preparation of separator]

### Preparation of porous substrates

A porous substrate was prepared in the same manner as in Example 1, except that the porous substrate was formed with a constant thickness of 15 µm without thickness change throughout the longitudinal direction.

### Preparation of porous coating layer

A porous coating layer was formed according to the same method as in Example 1, except that the thickness was formed at a constant thickness of 4.5 µm without any change in the entire longitudinal direction, and thus a separator having a constant thickness of 24 µm was prepared.

### [Manufacture of electrode assembly]

An electrode assembly was manufactured according to the same method as in Example 1, except for using the separator prepared above.

### [Evaluation of thickness change rate during hot press process]

The electrode assemblies of Example 1 and Comparative Example 1 manufactured above were fixed by hot pressing for 6 seconds at 90°C and a pressure of 6.5 MPa, respectively. At this time, the thickness change rate was measured in each region before and after hot pressing, and the results are shown in Table 1 below.

After pressing, the thickness of the separator was measured by using a thickness measuring device (Mitutoyo, VL-50S), and the thickness of the porous substrate was measured by peeling the porous coating layer from the separator using a tape, and then using the same thickness measuring instrument. At this time, the thickness of the porous substrate was verified by using the thickness value obtained through the SEM image of the cross-section of the separator before peeling the porous coating layer.

In Table 1 below, the innermost portion represents a region in which the thickness of the porous substrate is maintained constant, and the outermost portion represents a region in which the thickness of the porous substrate decreases toward both end portions.

**[Table 1]**

| Division | Innermost thickness deformation rate (%) | Outermost thickness deformation rate (%) | | |
|---|---|---|---|---|
| | total thickness deformation rate of the separator | thickness deformation rate of the porous substrate | total thickness deformation rate of the separator | thickness deformation rate of the porous substrate |
| Comparative Example 1 | 9.9 | 8.7 | 21.6 | 18.9 |
| Example 1 | 10.1 | 9.0 | 11.8 | 9.1 |

As confirmed in Table 1, the innermost change before and after hot pressing was at a similar level to Comparative Example 1 and Example 1, but the electrode assembly of Example 1, including the separator, gradually increased the thickness of the porous coating layer as the thickness of the porous substrate gradually decreased toward both upper and lower end portions of the electrode assembly in the stacking direction, respectively.

### [Evaluation of durability of electrode assembly]

In order to measure the thickness deformation rate, the dielectric breakdown voltage was measured using the porous substrates according to Example 1 and Comparative Example 1 in which the porous coating layer was removed through the taping process, and the results are shown in Table 2 below.

The dielectric breakdown voltage was measured using an AC/DC/IR Hi-Pot tester. Specifically, the porous substrate was hot pressed and adhered to a stainless-steel mesh at 90°C, 4MPa, and 1 second, and then DC current was set to 0.5 mA, voltage boosts 100 V/s (Voltage 6 kV, ramp-up time 6s), and the voltage was measured when a short circuit occurred.

The dielectric breakdown voltage represents the result measured for the outermost porous substrate of the electrode assembly.

**[Table 2]**

| | Dielectric breakdown voltage of outermost porous substrate (V) |
|---|---|
| Comparative Example 1 | 719 |
| Example 1 | 1756 |

As shown in Table 2, it was confirmed that the dielectric breakdown voltage of Example 1 was much better than that of Comparative Example 1, which was inferred because the pore damage rate of the porous substrate was lowered even after the hot press process by the special structure of the separator of Example 1.

As described above with reference to embodiments and drawings of the present disclosure, various applications and modifications may be performed within the scope of the present disclosure based on the above description.

### [Description of reference numerals in the drawings]

| | | | |
|---|---|---|---|
| 1: | Electrode assembly | 3: | Separator |
| 5: | Cathode | 7: | Anode |
| 10: | Separator | 11: | Porous substrate |
| 12: | Porous coating layer | 10a: | Center in the longitudinal direction of the separator |
| 10b: | Center in the thickness direction of the separator | 20a: | Anode |
| 20b: | Cathode | 30: | Electrode assembly |
| 40: | Press process of electrode assembly | 40a: | Uppermost region |
| | | | of the electrode assembly |
| 40b: | Lowermost region of the electrode assembly | 101: | Position A |
| 102: | Position A' | 103: | Position E |
| 104: | Position E' | X: | Uppermost region based on stacking direction |
| Y: | Lowermost region based on stacking direction | Z: | Inner region based on stacking direction |
| Ts: | Thicknesses of the porous substrate | Tc₁, Tc₂: | Thicknesses of the porous coating layer |

## Claims

1. An electrode assembly (30) comprising a unit electrode (20a, 20b) and a separator (10) having a strip form,
wherein the separator (10) is folded in a zigzag manner, and the unit electrode (20a, 20b) is provided in an overlapped portion of the folded separator (10),
the separator (10) comprises a porous substrate (11) of a polymeric material and a porous coating layer (12) formed on each surface of the porous substrate and comprising inorganic particles,
the porous substrate (11) has a constant thickness (Ts) in a middle region AA' ranging from a first position (A) to a second position (A'), the first position (A) and the second position (A') being in opposite directions and being equidistant from the center of the porous substrate (11) in the longitudinal direction,
all or at least parts of a region AE ranging from the first position (A) to one end (E) and a region A'E' ranging from the second position (A') to the other end (E') are disposed at the uppermost and lowermost relative to the stacking direction of the electrode assembly (30), respectively,
the porous substrate (11) has a gradient thickness (Ts) in which the thickness gradually decreases towards either end from the middle region in a longitudinal direction of the separator,
the porous coating layer (12) has a gradient total thickness (Tc) in which the thickness gradually increases towards either end from the middle region in the longitudinal direction of the separator (10), and
the total thickness (Ts + Tc) is constant across the plane of the separator (10).

2. The electrode assembly (30) of claim 1, wherein
the middle region AA' between the first position (A) and the second position (A') is disposed at neither an uppermost end portion or lowermost end portion of the electrode assembly (30) in a stacking direction of the electrode assembly (30), and
in separator regions positioned at the uppermost and lowermost end portions of the separator (10) in the stacking direction, the thickness (Ts) of the porous substrate (11) decreases towards an end of the separator.

3. The electrode assembly (30) of claim 1, wherein the porous coating layers (12) respectively formed on the upper and lower surfaces of the porous substrate (11) are symmetric with respect to a center line of the longitudinal direction of the separator (10), so that the thickness of the porous coating layer on the upper surface is equal to or within 10% of the thickness of the porous coating layer on the lower surface, at equidistant positions in a direction orthogonal to the longitudinal direction.

4. The electrode assembly (30) of claim 1, wherein
the separator (10) is formed to have a symmetrical structure with respect to the center line of the longitudinal direction, and
in the regions AE and A'E', the thicknesses (Ts) of the porous substrate (11) at equidistant positions from the center line of the longitudinal direction are equal to each other or within 10% of each other.

5. The electrode assembly (30) of claim 1, wherein the ratio (Ts/Tc) of the thickness (Ts) of the porous substrate (11) to the total thickness (Tc) of the porous coating layer (12) is in a range of from 0.5 to 5 across the entire area of the separator (10).

6. The electrode assembly (30) of claim 1, wherein the ratio (Ts/Tc) of the thickness (Ts) of the porous substrate (11) to the total thickness (Tc) of the porous coating layer (12) is in a range of from 1 to 5 at the first position (A).

7. An electrochemical device comprising the electrode assembly (30) of claim 1 accommodated in a case.

8. The electrochemical device of claim 7, wherein the electrochemical device is a lithium secondary battery.

## Patentansprüche

1. Elektrodenanordnung (30), umfassend eine Einheitselektrode (20a, 20b) und einen streifenförmigen Separator (10),
wobei der Separator (10) zickzackförmig gefaltet ist und die Einheitselektrode (20a, 20b) in einem überlappenden Abschnitt des gefalteten Separators (10) angeordnet ist,
der Separator (10) ein poröses Substrat (11) aus einem Polymermaterial und eine poröse Beschichtungsschicht (12), die auf jeder Oberfläche des porösen Substrats ausgebildet ist und anorganische Partikel umfasst, umfasst,
das poröse Substrat (11) in einem mittleren Bereich AA', der sich von einer ersten Position (A) bis zu einer zweiten Position (A') erstreckt, eine konstante Dicke (Ts) aufweist, wobei die erste Position (A) und die zweite Position (A') in entgegengesetzten Richtungen liegen und in Längsrichtung den gleichen Abstand zum Mittelpunkt des porösen Substrats (11) aufweisen,
der gesamte oder zumindest Teile eines Bereichs AE, der sich von der ersten Position (A) bis zu einem Ende (E) erstreckt, und ein Bereich A'E', der sich von der zweiten Position (A') bis zum anderen Ende (E') erstreckt, jeweils relativ zur Stapelrichtung der Elektrodenanordnung (30) am obersten bzw. untersten Ende angeordnet sind,
das poröse Substrat (11) eine Gradientendicke (Ts) aufweist, bei der die Dicke vom mittleren Bereich aus in Längsrichtung des Separators zu beiden Enden hin allmählich abnimmt,
die poröse Beschichtungsschicht (12) eine Gesamtgradientendicke (Tc) aufweist, bei der die Dicke vom mittleren Bereich aus in Längsrichtung des Separators (10) zu beiden Enden hin allmählich zunimmt, und
die Gesamtdicke (Ts + Tc) über die Ebene des Separators (10) hinweg konstant ist.

2. Elektrodenanordnung (30) nach Anspruch 1, wobei der mittlere Bereich AA' zwischen der ersten Position (A) und der zweiten Position (A') weder an einem obersten Endabschnitt noch an einem untersten Endabschnitt der Elektrodenanordnung (30) in einer Stapelrichtung der Elektrodenanordnung (30) angeordnet ist, und
in den Separatorbereichen, die in Stapelrichtung an den obersten und untersten Endabschnitten des Separators (10) liegen, nimmt die Dicke (Ts) des porösen Substrats (11) zum Ende des Separators hin ab.

3. Elektrodenanordnung (30) nach Anspruch 1, wobei die porösen Beschichtungsschichten (12), die jeweils auf der Ober- und Unterseite des porösen Substrats (11) ausgebildet sind, symmetrisch zu einer Mittellinie der Längsrichtung des Separators (10) sind, sodass die Dicke der porösen Beschichtungsschicht auf der Oberseite an gleich weit entfernten Positionen in einer Richtung senkrecht zur Längsrichtung gleich der Dicke der porösen Beschichtungsschicht auf der Unterseite ist oder innerhalb von 10% davon liegt.

4. Elektrodenanordnung (30) nach Anspruch 1, wobei der Separator (10) so ausgebildet ist, dass er eine symmetrische Struktur bezüglich der Mittellinie der Längsrichtung aufweist, und
in den Bereichen AE und A'E' die Dicken (Ts) des porösen Substrats (11) an gleich weit von der Mittellinie der Längsrichtung entfernten Positionen einander entsprechen oder innerhalb von 10% voneinander liegen.

5. Elektrodenanordnung (30) nach Anspruch 1, wobei das Verhältnis (Ts/Tc) der Dicke (Ts) des porösen Substrats (11) zur Gesamtdicke (Tc) der porösen Beschichtungsschicht (12) über die gesamte Fläche des Separators (10) in einem Bereich von 0,5 bis 5 liegt.

6. Elektrodenanordnung (30) nach Anspruch 1, wobei das Verhältnis (Ts/Tc) der Dicke (Ts) des porösen Substrats (11) zur Gesamtdicke (Tc) der porösen Beschichtungsschicht (12) an der ersten Position (A) in einem Bereich von 1 bis 5 liegt.

7. Elektrochemische Vorrichtung, umfassend die in einem Gehäuse untergebrachte Elektrodenanordnung (30) nach Anspruch 1.

8. Elektrochemische Vorrichtung nach Anspruch 7, wobei die elektrochemische Vorrichtung eine Lithium-Sekundärbatterie ist.

## Revendications

1. Ensemble électrode (30) comprenant une électrode unitaire (20a, 20b) et un séparateur (10) présentant une forme de bande,
dans lequel le séparateur (10) est plié en zigzag, et l'électrode unitaire (20a, 20b) est disposée dans une portion superposée du séparateur plié (10),
le séparateur (10) comprend un substrat poreux (11) en un matériau polymérique et une couche de revêtement poreuse (12) formée sur chaque surface du substrat poreux et comprenant des particules inorganiques,
le substrat poreux (11) présente une épaisseur constante (Ts) dans une région médiane AA' allant d'une première position (A) à une seconde position (A'), la première position (A) et la seconde position (A') étant dans des directions opposées et étant équidistantes du centre du substrat poreux (11) dans la direction longitudinale,
la totalité ou au moins des parties d'une région AE allant de la première position (A) à une extrémité (E) et d'une région A'E' allant de la seconde position (A') à l'autre extrémité (E') sont disposées à l'endroit le plus haut et à l'endroit le plus bas par rapport à la direction d'empilement de l'ensemble électrode (30), respectivement,
le substrat poreux (11) présente une épaisseur en gradient (Ts), telle que l'épaisseur diminue progressivement vers l'une ou l'autre extrémité, depuis la région médiane, dans une direction longitudinale du séparateur,
la couche de revêtement poreuse (12) présente une épaisseur totale en gradient (Tc), telle que l'épaisseur augmente progressivement vers l'une ou l'autre extrémité à partir de la région médiane, dans la direction longitudinale du séparateur (10), et
l'épaisseur totale (Ts + Tc) est constante sur tout le plan du séparateur (10).

2. Ensemble électrode (30) selon la revendication 1, dans lequel
la région médiane AA' située entre la première position (A) et la seconde position (A') n'est disposée ni à une portion d'extrémité la plus haute ni à une portion d'extrémité la plus basse de l'ensemble électrode (30) dans une direction d'empilement de l'ensemble électrode (30), et
dans des régions du séparateur positionnées à la portion d'extrémité la plus haute et à la portion d'extrémité la plus basse du séparateur (10) dans la direction d'empilement, l'épaisseur (Ts) du substrat poreux (11) diminue vers une extrémité du séparateur.

3. Ensemble électrode (30) selon la revendication 1, dans lequel les couches (12) de revêtement poreux respectivement formées sur les surfaces supérieure et inférieure du substrat poreux (11) sont symétriques par rapport à une ligne centrale de la direction longitudinale du séparateur (10), de sorte que l'épaisseur de la couche de revêtement poreux sur la surface supérieure est égale à l'épaisseur de la couche de revêtement poreux sur la surface inférieure, ou diffère de celle-ci de moins de 10 %, à des positions équidistantes dans une direction orthogonale à la direction longitudinale.

4. Ensemble électrode (30) selon la revendication 1, dans lequel
le séparateur (10) est formé de manière à présenter une structure symétrique par rapport à la ligne centrale de la direction longitudinale, et
dans les régions AE et A'E', les épaisseurs (Ts) du substrat poreux (11) à des positions équidistantes de la ligne centrale de la direction longitudinale sont égales l'une à l'autre ou diffèrent l'une de l'autre de moins de 10 %.

5. Ensemble électrode (30) selon la revendication 1, dans lequel le rapport (Ts/Tc) de l'épaisseur (Ts) du substrat poreux (11) à l'épaisseur totale (Tc) de la couche (12) de revêtement poreux est situé dans une plage allant de 0,5 à 5 sur la totalité de la surface du séparateur (10).

6. Ensemble électrode (30) selon la revendication 1, dans lequel le rapport (Ts/Tc) de l'épaisseur (Ts) du substrat poreux (11) à l'épaisseur totale (Tc) de la couche (12) de revêtement poreux est, à la première position (A), situé dans une plage allant de 1 à 5.

7. Dispositif électrochimique comprenant l'ensemble électrode (30) selon la revendication 1, logé dans un boîtier.

8. Dispositif électrochimique selon la revendication 7, dans lequel le dispositif électrochimique est une batterie secondaire au lithium.
